# EUROPEAN PATENT SPECIFICATION

(11) **EP 1 427 945 B1**
(45) Date of publication and mention of the grant of the patent: **05.07.2006**
(21) Application number: 02758048.9
(22) Date of filing: 13.09.2002
(51) Int. Cl.: F16B 7/04

(54) **CONNECTORS**
VERBINDER
ELEMENTS D'ASSEMBLAGE

(30) Priority: 14.09.2001 US 952442; 13.05.2002 US 144429
(43) Date of publication of application: 16.06.2004
(73) Proprietor: Laudex Company Limited, Quarry Bay, Hong Kong (CN)
(72) Inventor: CHOY, Yau King, Quarry Bay, Hong Kong (CN)
(74) Representative: Jenkins, Richard Gavin
(86) International application number: PCT/CN2002/000655
(87) International publication number: WO 2003/025404

(56) References cited:
- CN-A- 1 252 494
- DE-A- 19 514 752
- DE-U1- 8 907 657
- DE-U1- 9 410 897
- FR-A- 2 214 497
- GB-A- 1 515 297
- GB-A- 2 093 517
- US-A- 2 508 039
- US-A- 4 958 953
- US-B1- 6 202 663

## Description

### Technical field

The invention relates to mechanical connectors. The invention relates more particularly to 'structural' connectors for fixing pipes and the like together end-to-end in-line or angled with respect to one another, and for fixing pipes to a wall or other planar surface.

### Background art

At present, connectors that are available do not usually provide much resistance to bending moments at the end of the pipe. For different applications the connectors necessarily require different basic components, and are not simple in operation or assembly. Besides, the connectors are not ready to be released from the tubes to be reassembled in general.

GB 2093517A discloses a securing means for securing a tubular member to an article or another tubular member.

### Summary of the invention

It is an object of the invention to overcome or substantially ameliorate these problems.

According to the invention there is provided a releasable connector as defined by claim 1.

From a first broad aspect the present invention provides a releasable connector as claimed in claim 1.

The convergent members might be frusto-conical. However, they could be any combination of frusto-conical and frusto-pyramidal.

The elongate sleeve is preferably split into two equal parts.

The sleeve parts are preferably resiliently held together radially by a strap that surrounds a periphery of the sleeve.

The elongate sleeve is preferably cylindrical and fits into cylindrical cavities at the ends of respective pipes.
The elongate sleeve may be rectangular in cross-section to more efficiently connect to pipes having rectangular cross-section cavities at least in their ends.

Alternatively the sleeve can be formed by material with certain elasticity with cross-section of its outer surface to be the same or even a little larger than that of the internal section of the tube. There can be a slit and two or more troughs along the axial direction between the hole for the operating rod and the outer surface of the sleeve for the circular tube, or there can be a slit and some troughs along the direction of the operating rod between the hole for the rod and the corners or other proper positions in the outer surface of the sleeve for other tube. The elasticity and the slit and troughs enable the sleeve to be compressed and inserted and adhered to the internal surface of the tube. This achieves friction between the internal surface of the tube and the external surface of the sleeve. In this case the movement of the convergent members along the rod towards each other cause the increase of pressure between the tube and the sleeve.

The sleeve can be used to connect pipes having regular or irregular cross-sectional cavities.

The use of cones, or pyramids, or a cone and a pyramid in the connector in some embodiments is independent of the internal shape of the tube. In some cases, it depends on operating conditions.

The angle of the sides of the convergent members is typically between 25° and 65°. As the two members move towards each other, they will adjust themselves automatically, and squeeze the ends of the sleeve, which makes both ends of the sleeve as well as the whole sleeve adhere to the internal surface of the tube. When the two locking bodies move outwards from each other, the large vertical angles of the locking bodies enable the securing body to slide along the slant surface of the convergent members. This releases the connector from the tube. The use of two members or 'locking bodies' will remove the defect of the adhering of one end of the sleeve to a plate, when only one locking body is used to secure the sleeve to the tube, especially when the vertical angle of the locking body is large. That is the securing effect only occurs at one end. In some embodiments, the use of single locking body with a small wall angle can also be used to substitute the use of two locking bodies. However, there is a good change that the locking body will adhere permanently to the internal surface of the securing member and the tube. Preferably, the connector has an arm formed with a conical end or a pyramidal end with polygonal cross-section to provide one cone or one pyramid.

The connector may have two arms each with a conical end or a pyramid end with polygonal cross-section to form a respective cone or pyramid, and in which the connector is arranged to join two pipes together.

The connector may have three or more arms and can be arranged to connect three or more pipes together with longitudinal axes of the two or more of said pipes angled with respect to one another.

The arm may have an anchor arranged to be mounted and restrained by a cavity of a planar surface for mounting the arm to the planar surface, in which the operating arm comprises a bolt partially exposed extending out of one end of the connector into the cavity, when the connector is in its operative configuration.

A centrally mounted threaded nut may be entrapped within the connector and accessible from exterior of the connector when the connector is in its operative configuration.

The operating rod is anchored in an opened-sided body that provides one of the convergent members with a conical or polygonal cross-section at one end and allows the operating rod to be inserted sideways into the body.

The body may have convergent members in the form of a cone or pyramid with polygonal cross-section at each end, respectively forming part of a connector for connecting two like pipes end to end, in which a central part of the body has a region with an external diameter and shape equal to the outside diameters and shape of the two pipes to be connected.

A releasable connector for joining two pipes of different internal diameter end-to-end, may include two connectors and a single operating rod extending between two sleeves arranged to bear against respective inner surfaces of the pipes, in which the operating rod has a fixed conical head at one end and a threaded nut at the other end and such that the sleeves are urged outwards by relatively rotating the pipes to fix the pipes together.

Embodiments of the invention provide connectors, which can be releasable in case of need, from a tube or a hole in wall say. The connectors can be used to capture screwed nut inside the tube or hole, although connectors are normally used for connecting two tubes together end to end. Furthermore, by using or forming two or more connectors together, a multiple structural node connector can be provided where a multiple arm connector connects several tubes together.

### Brief description of the drawings

Preferred connectors will now described by way of example with reference to the accompanying drawings in which:
Figure 1 shows a schematic sectional view of one connector;
Figure 2shows a schematic sectional view of a second connector;
Figure 3 shows a schematic sectional view of a third connector;
Figure 4 shows a schematic sectional view of a fourth connector;
Figure 5 shows a side view of an embodiment according to the invention;
Figure 6 shows a schematic sectional view of an embodiment according to the invention;
Figure 7 shows a schematic sectional view of an embodiment according to the invention;
Figure 8 shows a schematic sectional view of an embodiment according to the invention;
Figure 9 shows a schematic sectional view of a connector;
Figure 10 shows a schematic sectional view of a connector;
Figure 11 shows a schematic sectional view of an embodiment according to the inention;
Figure 12 shows a schematic sectional view of an embodiment according to the invention;
Figure 13 shows a schematic sectional view of a connector;
Figure 14 shows a schematic sectional view of two three-arm embodiments according to the invention; and
Figure 15 shows a schematic sectional view of a four-arm embodiment according to the invention.

### Detailed description of the preferred embodiments

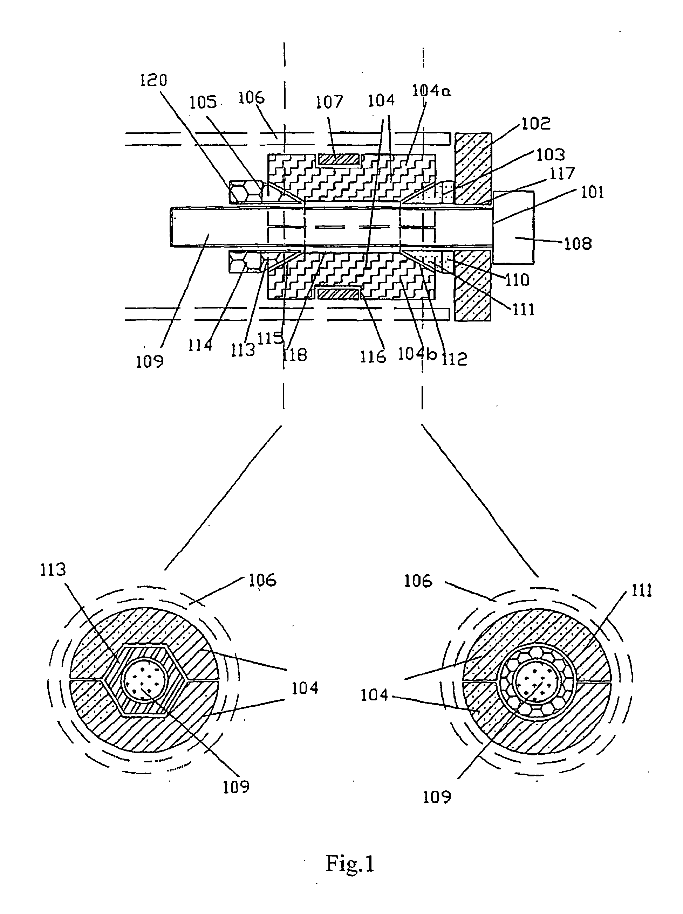

Referring to the drawings, in Figure 1 a plate 102 has central hole 117. A screw 101 has a head 108 and a thread stem 109 extending through the hole 117.
Surrounding the stem 109 is a first locking member 103 having a conical part 111 and cylindrical part 110 and central hole for the stem 109. A securing member (or split sleeve) 104 has two like semi-cylindrical bodies 104a and 104b, forming a 'split sleeve', with conical cavity 112 and hexagonal pyramidal cavity 115 at their ends. The shape of the conical cavity 112 is similar to the shape of the conical locking parts 111 and 103, but a little smaller. The conical locking body lies between the plate 102 and the securing member 104, having the conical part 111 contiguous to the conical cavity 112. The securing bodies 104a and 104b rest against each other along their edges as shown by the dashed lines along the center of the figure. The securing member 104 fits snugly inside and extends along adjacent the end of a tube 106. A strap 107 lies in a central peripheral trough 116 formed in an outer surface of the securing member 104. An outer surface of the strap fits flush with or lies within the outer surface of the securing member 104. The strap 107 is elastic, and retains the two securing bodies 104a and 104b radially together. There is hole 118 in the securing member 104 that allows the stem 109 of the screw 101, forming an operating rod, to pass through. The securing body 104 lies between the conical locking body 103 and the pyramidal locking body with hexagonal cross-section 105. The second locking body 105 has a hexagonal cylinder part 114, a pyramidal part with hexagonal cross-section 113 and a central threaded hole 120. The pyramidal part 113 of the pyramidal locking body is contiguous with the cavity 115 at the other end of the securing member 104. The shape of the pyramidal cavity 115 of the securing member 104 is similar to the shape of its counter pyramidal part 113 of the locking body 105. The connector is inserted into the tube 106 as shown in Figure 1.

To operate the connector of Figure 1, a screwdriver or similar, may be applied to the head 108 of the screw 101. The screw 101 may be rotated appropriately so as to draw the first and second locating bodies 103 and 105 towards each other. The opposing locking bodies 103 and 105 will be urged against the cavities 112 and 115. The securing bodies 104a and 104b will be forced radially outwards to grip against the inside of the tube 106. I n this way, the connector grips the tube and so is secured therein so as to prevent movement thereafter of the tube away from the connector, i.e., to the left in the Figure.

To release the connector from the tube, the screwdriver is inserted to undo the screw 101 so that the conical locking body 103 and pyramidal locking body 105 are moved away from one another. This removes the radially outward compression force applied by the securing bodies 104a and 104b. Tension in the elastic strap 107 restores the securing bodies to the original position, allowing the securing bodies to be slid out of the end of the tube 106.

Preferably at the interface extending along (the dashed line) between the securing bodies 104a and 104b, locating pins may be provided to prevent the securing body 104a from sliding longitudinally relative to the securing body 104b.

Preferably the securing member 104 is formed by material with some elasticity such as a plastic material, and one of the interfaces between securing bodies 104a and 104b may then be welded together, allowing the bodies to hinge along the interface. Thus, when the screw 101 rotates, longitudinal pressure applied by the conical locking body and pyramidal locking body 103 and 105 will make the securing member deform at least to some extent radially outwards. Deformation at the outer surface of the securing member causes the outer surface to be urged against the inside of the tube to establish frictional grip and secure the connector in the tube.

The tube is arranged to be connected to the plate 102. By making the appropriate adjustment of the shape of the end of the tube and the length of the screw, this connector can be arranged to attach a tube a planar surface of some other object, if required. Without the plate 102, the connector can still provide a friction grip with the tube 106 by rotation of the screw.

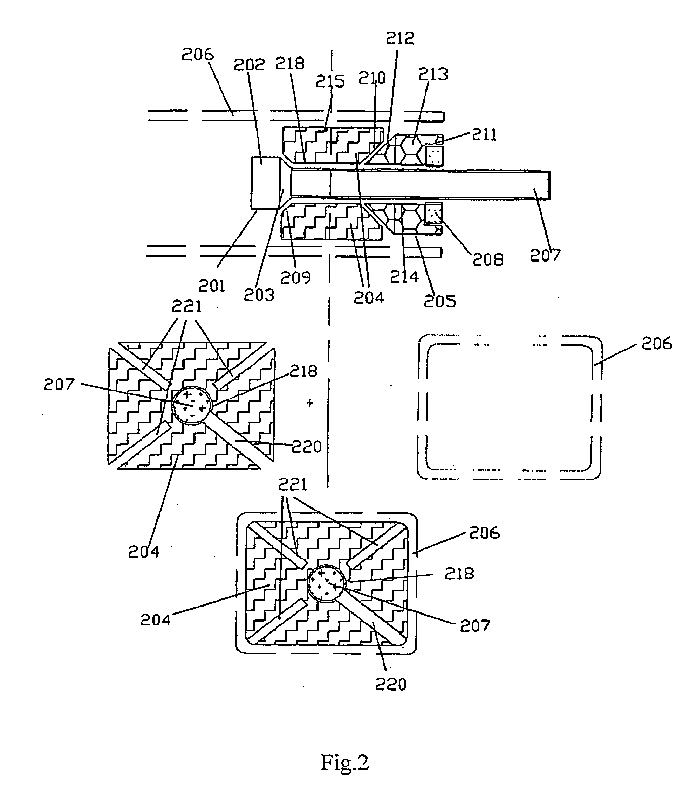

Figure 2 shows an alternative example of the connector shown in Figure 1, for fixing a screw with the stem of the screw extending out from the tube.

In Figure 2, a screw 201 has a screw head 202, a conical base 203 and a stem 207, which conical base 203 of the screw 201 acts as the conical part 111 of the first conical locking body 103 in Figure 1. The conical base 203 of the screw 201 is contiguous with a concave cavity 209 of the securing member 204. On the other end of the securing member 204 is the locking body 205, having a hexagonal threaded nut 208 in an indentative hole 211 in its base. The conical locking body 205 has a cylindrical part 213 and a conical part 212 and a hole 214, having a hexagonal cylindrical slot 211 at the base of a cylindrical part 213. The hexagonal nut 208 is positioned in the hexagonal hole 211 on the stem 207 of the screw 201. Rotation of the screw 201 urges conical locking part 203 and 212 towards each other. Hence, the locking body 205 and the screw-nut 208 function similarly as the pyramidal locking member. 105 in Figure 1.

When the tube employed has a rectangular cross-sectional surface with fillet corners, the cross section of the sleeve 204 can be the same or even a little larger than the internal cross-section of the tube. The sleeve 204 here is a single object with certain elasticity. There is a slit 220 and three troughs 221 along the axial direction between the hole 218 for the stem 207 of the screw 201 and the four corners. The openings of the troughs are positioned outwards from the hole 218. Under force the slit 220 and troughs 221 shrink, and this enables the sleeve as well as other parts of the connector to be inserted into the tube.

To operate the connector in Figure 2, the connector is inserted into a tube 206 with the stem 207 of the screw 201 extending out of the tube. A suitable wrench can rotate the conical locking body 205 and the entrapped nut 208, which are drawn along the threaded stem 207. The connector is thus operated in the same manner as in Figure 1, so that the connector can be secured in the tube. This fixes a screw with an exposed thread stem 207 at the end of the tube 206. However there is no obvious radial motion of the sleeve.

Alternatively when the tube 206 has a circular cross-section, a securing member with a slit and troughs can also be used. Friction between the sleeve and the interior of the tube 206 prevents the sleeve from rotating inside the tube, when the wrench rotates the conical locking body 205.

Alternatively when the tube 206 has a circular cross-section, and sleeve in two parts similar to Figure 1, the operation of the connector can still be the same. However, before the connector is inserted into the tube, it is envisaged that the securing member 204 can be adjusted to be able to be snugly inserted into the bore of the tube 206. This is done by rotating screw 201, so that the two locking bodies, conical base 203 of the screw and the conical locking body 205 with the nut 208, suitably compress the securing bodies 204. The surface of the securing member is adjusted so that some friction will exist when the connector is first inert in the end of the tube. Thus when the screw is first tightened, the securing member will not rotate inside the tube.

Part of the surface of the cylinder part 213 of the conical locking body may have flat surfaces or other suitable shapes, for example the cylinder part may be hexagonal in cross-section. This facilitates a wrench to grip the conical locking body 205 during locking of unlocking of the connector.

The tube provided with an exposed screw at its end can be used to connect the tube against a surface of a plate using separate nut. The tube can also be connected another tube, where the tube with the screw at its end acts as a special screw for another connector. The connector can also be used to fix an exposed screw in an aperture in an object.

The operation of the connector can also be carried out with a screwdriver or other suitable driving implement from the left-hand side through the tube. The screw head is threaded forward towards the locking member 205 similar to that in Figure 1. The connector is secured to the tube.

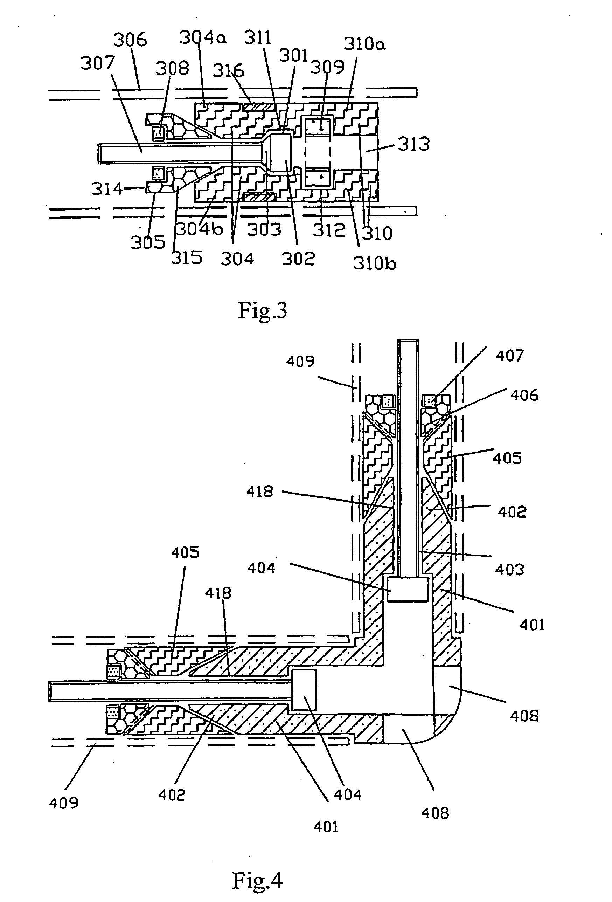

Figure 3 shows a third example of a connector for connecting a threaded nut to a tube.

The arrangement in Figure 3 is a modification of the connector shown in Figure 1. Main bodies 310a and 310b are formed integrally with securing bodies 304a and 304b. There is a hole 313 in main body 310a and 310b that acts as an access aperture for a screwdriver or similar implement. A screw head 302 lies inside the main bodies 310a and 310b. A cavity 312 is provided to receive a hexagonal screw nut 309. A conical base 303 of the screw head 302 acts as the first conical locking body. A conical locking body 305 with the threaded nut 308 in a slot 315 at the base cylinder 314 acts as the second conical locking body. The connector, with the screw nut 309 in cavity 312, is inserted into the tube 306. A screwdriver or other implement can pass through the aperture 313 and the central hole of the nut 309 for fixing the connector inside the tube 306.

The described connector can be easily connected to a plate by a screw passing through the plate. Where the diameters of two tubes are the same, the tubes in Figures 2 and 3 can be connected directly end to end. The tubes may be connected together with an intervening plate, where the plate acts as an adapter where required. Such combination of tubes and plates, with holes in the plates, can be used to build shelves that can be easily assembled and disassembled using the described connectors.

Figure 4 shows an example of a connector. The connector includes a right-angular metallic body 401 with conical heads 402, having access holes 408 at right angles to each other, for receiving the locking screw 404. In the arms there are holes 418 along the axial direction to receive the stem of the screw 404. Securing members 405 surround the screws 404. Conical heads 402, securing members 405, conical locking bodies 406 with threaded nuts 407 are adjoined with each other. Turning screws 404 enables each connector to be fixed, or locked, to the tubes 409 in the same manner as before.

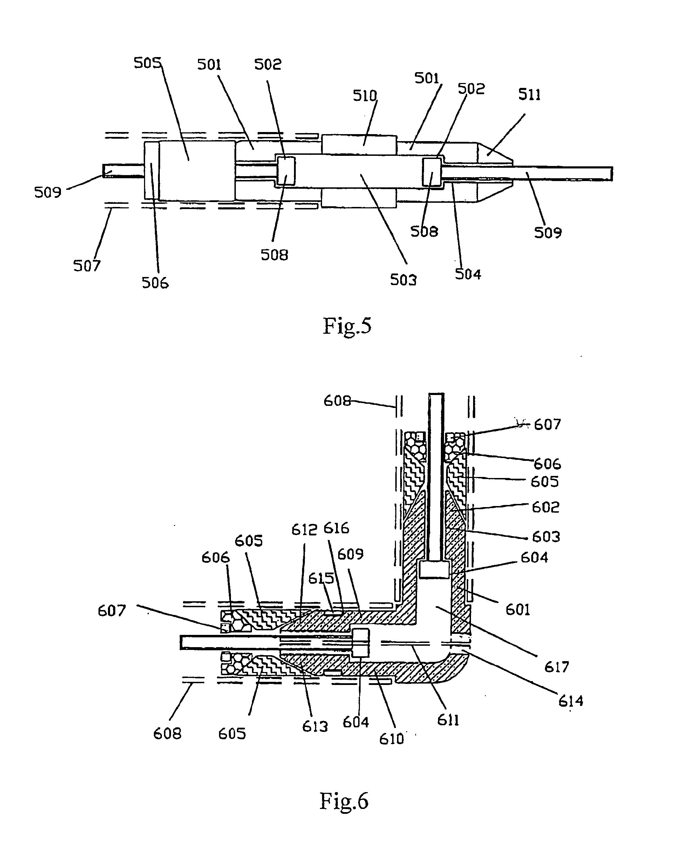

Figure 5 shows an embodiment of the invention which constitutes an alternative to the connector of Figure 4. An elongate body 501 has screw 502 entered sideways through open sided U-shaped grooves 503 and 504. The grooves are formed with screw holes, which extend through opposite ends of the body 501 and the conical locking head 511 extending along the axial direction. A trench above the axial plane has a width equal to the diameter of the corresponding hole. Screw heads 508 lie in the U-shaped groove 503, which groove is the operating groove for the screws. The body 501 is enlarged centrally at 510, the peripheral surface of which is flush with the outer surface of the tube 507. On the stem of the left-hand screw 502 there is a securing member 505 and a conical locking body 506, each of which is placed inside the tube 507. Tightening of the connector fixes the screw 508 in the axial position of the tube automatically.

Figure 6 shows another embodiment of the invention.

An arm extending in the vertical direction is the same as that shown in Figure 4. However, an arm extending in the horizontal direction has two like parts 609 and 610. The opposing parts 609 and 610 have semi-conical heads, 612 and 613, which in combination forms an arm with a conical head. The two parts are held together by an elastic strap 615 that lies in a trough 616 formed in the outer surface of the horizontal arm. An outer surface of the strap is flush or within the outer surface of the arm. There are small locating pins (not shown) at the interface between bodies 609 and 610, that prevent the interface surfaces from sliding along each other. An access aperture 614 for a horizontal screw is provided.

To operate the connector in Figure 6, the body 601 and conical head 602 of the connector is set to be contiguous with the securing member 605 about the stem of the screw 604. On the end of the screw 604 is the hexagonal threaded nut 607, which being in the indentative slot in the base of conical locking body 606. The locking body 606 is contiguous with the other end of the securing body 605. An arm of the connector is inserted into the vertical tube 608. A screwdriver or similar implement can be used to rotate the screw 604 to secure the connector arm to the tube 608. The bodies 609 and 610, and the conical heads 612 and 613, and the second screw 604 in the screw hole are then fixed together by the strap 615. The securing member 605 and the conical locking body 606 with nut 607 are then assembled together on the shank of screw 604 contiguous to the conical heads 612 and 613, and are inserted into the horizontal tube 608. A screwdriver can then be used to operate the second connector through the aperture 614, and to secure the connector on the horizontal tube.

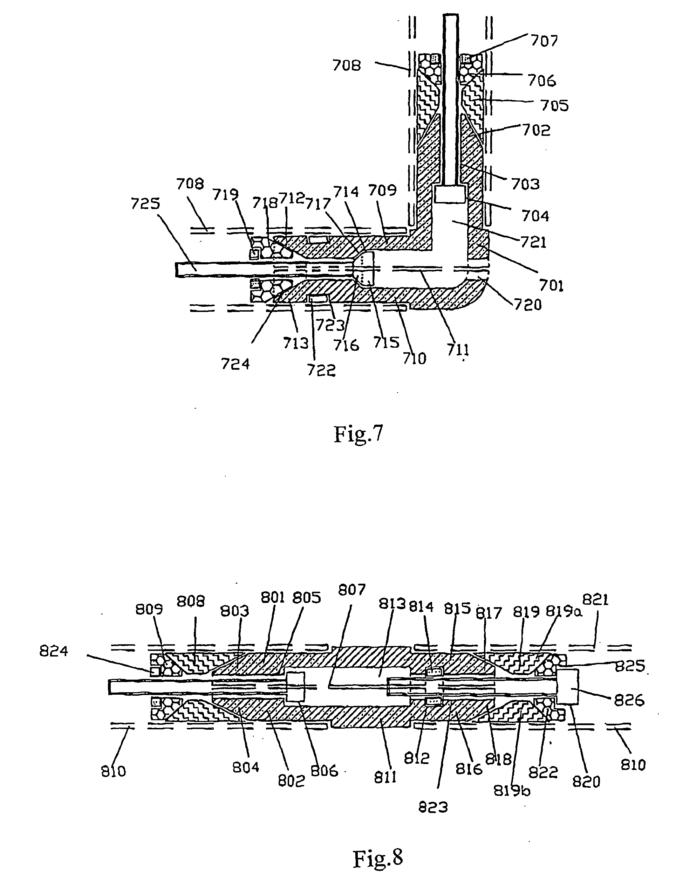

Figure 7 shows another embodiment of the present invention for multiple arm connector that has two arms perpendicular with each other. The arm in the vertical direction is the same as that in Figure 6, while the arm in the horizontal direction has body parts 709 and 710 integrally formed with securing members 712 and 713, which body is halved across the horizontal plane 711 in an axial direction. The body 701 of the vertical arm is integrated only with the body 709 of the horizontal arm. The connector in the horizontal direction is similar to that used in Figure 3 for fixing a threaded nut in a tube except no nut is required. Instead there is an access aperture 720 in the body, for a screwdriver or similar.

To operate the multiple arm connector of Figure 7, the body 701 with a conical head 702, a screw 704, a securing member 705, and a conical locking body 706 with a nut 707 are adjoined as in Figure 6. The arm is then inserted to a tube 708, and is secured to the tube 708 using a screwdriver entered through the hole 721. The horizontal body 709 is integrated with the securing body 712, while the body 710 is integrated with the securing body 713. A peripheral trough 723 is provided in the outer surfaces of the securing members 712 and 713. The bodies 709 and 710 with the securing members 712 and 713 of the horizontal arm are then brought together with a screw 715 in position, and held together by a strap 722. The outer surface of the elastic strap 722 is flush with or within the outer surface of the arm. The screw 715 has a conical base 716, which conical base 716 is assembled in the corresponding conical cavity of the securing member 712 and 713. The conical locking body 718 with a nut 719 is on the stem 725 of the screw 715 and is in the conical cavity 724 in the other end of the securing member 712 and 713. The arm is then inserted into the second tube 708. A screwdriver can then be used to secure the connector to the tube 708.

Figure 8 shows an alternative embodiment of a multiple arm connector that has two in-line arms and a body formed by two semi-circular cylinders with convex ends 803 and 804, and 817 and 818. The arm at the left-hand side is similar to the horizontal arm of the connector in Figure 6. The body 811 extends in an opposite direction (to the right) to form a second arm of the connector. A threaded nut 814 is trapped snugly in the slot 812 of the second arm similar to that of Figure 3. The second arm has bodies 815 and 816 with convex conical ends 817 and 818 and central hole 823. The components of the connector for the left-hand arm, the bodies 801 and 802 with the convex conical ends 803 and 804, the securing member 808, and the conical locking body 809 with nut 824, screw 806; and the components for the right-hand arm, the bodies 815 and 816 with conical ends 817 and 818, and the nut 814 in the slot 812, are then assembled together like the horizontal arm in Figure 6 and the screw nut in the slot in Figure 3. The left-hand arm then is inserted into the tube 810. A screwdriver, or other driving implement, can pass through a hole 823 in the right arm and the hole of the screw nut 814 for securing the left-hand side connector to the tube 810. The conical end 817 and 818 of the second arm, the securing member 819, the conical locking body 822 and the screw 820 with hexagonal screw head 826 are then adjoined with each other as shown in Figure 8. The base of the conical body 822 has a hexagonal slot 825 for receiving the head 826 of the screw 820 snugly. The securing member is formed by securing bodies 819a and 819b.

To operate the connector in the right-hand arm, the conical locking body, with the screw 825, is rotated to thread the screw towards the nut 814. The conical locking bodies 817 and 818 move towards the locking body 822. The sloping surfaces of the locking bodies force the securing member 819 to move radially outwards. The connector is adjusted so that the securing body 819 may be inserted into the tube 821 with at least some friction. The right-hand arm is then inserted into the tube 821. Tube 821 is then rotated. The established friction between tube 821 and the securing member 819, and the friction between the conical locking body 822 and the securing member 819, make the securing member 819, the conical locking body 825 and the screw 820 follow the rotation. Hence, the screw 825 threads further into the nut 814, so that the securing body 819 is further compressed. Upon further rotation of the tube, finally the connector is secured to the tube 810.

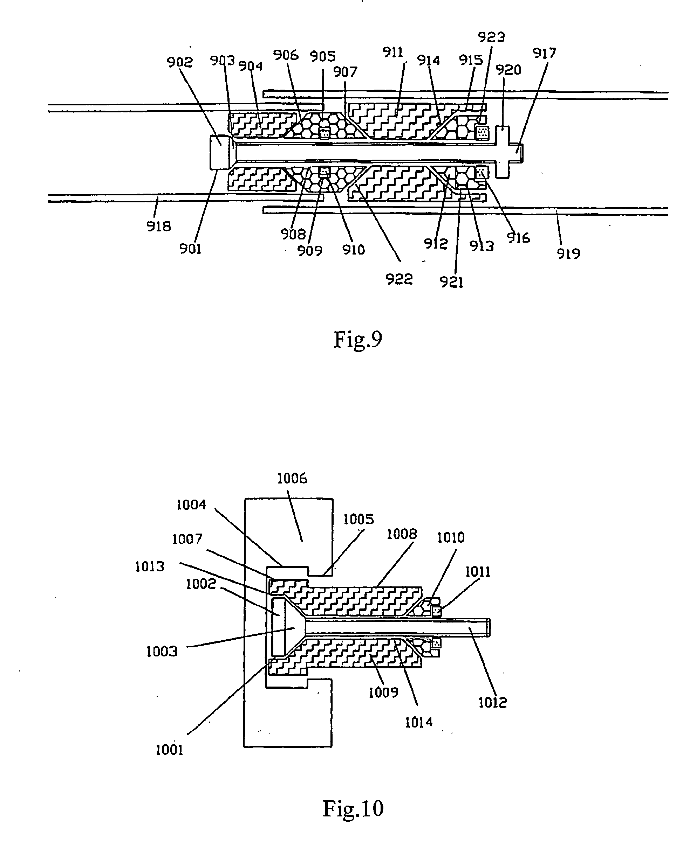

Figure 9 shows an example of connector for forming a composite tube with an adjustable length. A smaller diameter tube 918 is entered into a larger diameter tube 919, and fixed (locked) to the larger tube 919 by operating the connector by rotating the tubes relative to one another.

Firstly, a screw 902 is held inside the smaller tube with its conical base 903 on a screw head 901 against a securing body 904 and a conical locking body 906. A trapped threaded nut 910 lies in a slot 909, similar to the arrangement of Figure 2. The screw 902 has to be tightened and once fixed, the nut 910 can be welded to the screw stem 917 to fix it permanently in position. A convex conical locking body is provided by a body 905 with two convex conical bodies 906 and 907 on opposite sides of the body, with screw hole 908 and a slot 909 for entrapping the nut 910. A U-shaped trough can be used instead of the hole 908.

The smaller tube with the screw 901 fixed at its end acts as a screw. The screw 901, the conical locking body 907, the securing member 911, and the conical locking body 921 with hexagonal nut 916 on the stem 917 of the screw 901 forms the connector for the larger tube. A hexagonal cylinder part 913 and a conical part 912 form the conical locking body 921. The base of the hexagonal cylinder has a smaller hexagonal cylindrical hole to embrace the nut 916. The securing member 911 is made of material with some elasticity, such as nylon, which being relatively easy to deform. The securing member has a conical cavity 922 at one end which is provided to receive the convex conical body 907 of the conical locking body 905. A cavity at the other end of the securing member is formed by two parts, which are indentative to the conical locking body 921. The securing member has one slit and two trenches along the axial direction at 120° with each other. The thickness of the interior solid base section of the trench is a definite fraction of the thickness of the material used, to ensure the flexibility and the possible slight diminution of the radius of the securing member. The radius of the securing member at the central part is equal to or a little larger than the interior radius of the tube. The flexibility of the securing member enables it to be inserted into the tube while establishing some initial rotational friction against the interior surface of the tube. The plate 920 is welded to the stem after the connector of the larger tube is set contiguous therewith. The connector is then inserted into tube 919 to the position required. To operate the connector for the larger tube, the tubes are rotated relative to one another. An established friction exists between the inner surface of tube 919 and the securing member 911. The rotation turns the hexagonal cylinder body 913 of the conical locking 921, being in the hexagonal cylinder cavity 915, and the hexagonal screw nut 916 in the hexagonal slot 923 of the conical locking body 921 rotates together. The screw nut 916 threads forward along the stem 917 of the screw 901 towards the conical body 907 of the conical locking body 905. This makes the conical parts 912 and 907 press against the surfaces of the conical cavities 914 and 922 of the securing member, forcing the body of the securing member 911 to move radially outwards to grip on the inner surface of the tube 919. As the operation continues, the connector and the smaller tube 918 are secured to the larger tube 919.

To release the connector from the larger tube 919, the tubes 918 and 919 are rotated relatively in a reverse direction. The rotation of the tube 919 will cause the securing member 911, the conical locking body 921, and the screw nut 916 to rotate together. Hence the nut 916 threads outwards, with the conical locking body 921. Hence, the radial pressure caused by the securing member 911 is released. This allows the connector to slide along the tube 911. The plate 920 here is used to prevent the screw nut 916 unscrewing completely.

Alternatively screw 901 can have hexagonal cylindrical screw head 902 with conical base 903, while the adjacent cavity of sleeve 904 has indentative hexagonal cylinder part and conical part similar to the cavity in sleeve 911.

Figure 10 shows a further example of connector. An aperture or cavity in a body 1006 is formed with an outer hole 1005 and an inner larger hole 1004. The connector is similar to that used for locking a screw inside a tube, except a securing member 1009 is formed by two cylinders, a larger cylinder 1007 and a smaller cylinder 1008. The larger cylinder 1007 can fit snugly through the smaller hole 1005. When the connector is used and the securing bodies first move outwards, the larger cylinder 1007 fits against the larger hole 1004 and the smaller cylinder 1008 fits against the smaller hole 1005. A screw 1001 with an hexagonal screw head 1002 and conical base 1003 is entrapped in an indented cavity 1013. A threaded nut 1011, a securing member 1009, and a conical locking body 1010 are fitted together as shown in Figure 10. Rotation of the conical body 1010 will force the securing bodies to move outward, the cylinder 1007 in the hole 1004, and the cylinder 1008 in the hole 1005, to grip to the inside of the hole 1004 and 1005. Silicon gel can be introduced into the hole 1004 before the connector is inserted into the hole.

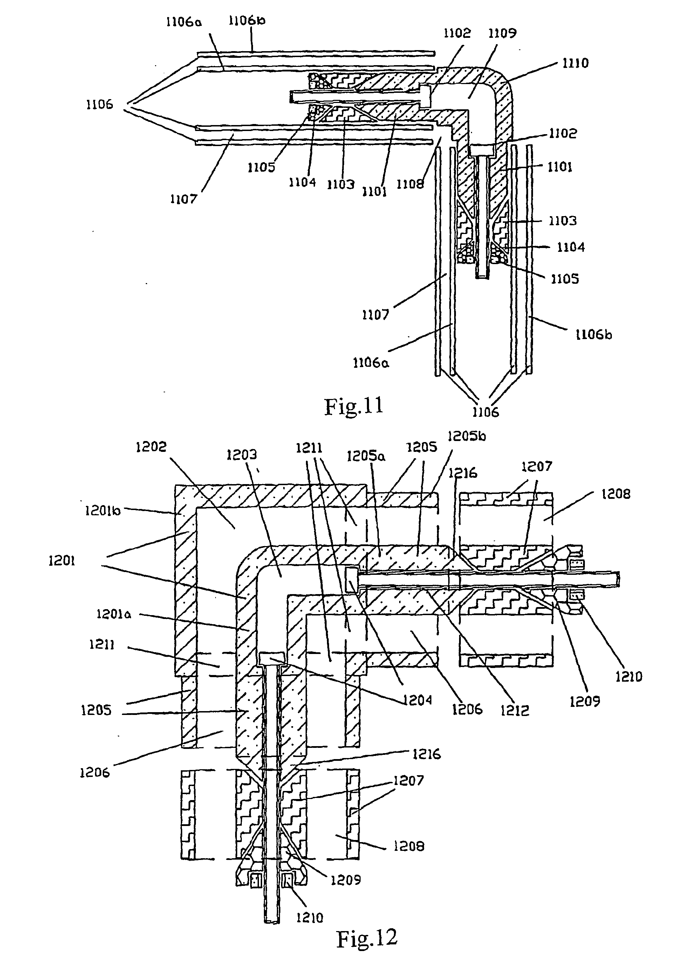

Figure 11 and Figure 12 show the further embodiments of the present invention that allow electrical wire to be housed inside the framework.

In Figure 11, a tube 1106 to be connected is formed by an inner tube 1106b and an outer tube 1106a with a space 1107 between them, being for accommodating the electric wire. A multiple arm connector has elongate bodies for arms to connect the inner tubes 1106b together. There is sufficient space for the wire to be around the outside of the body of the connector. Bodies and arms with U-shape grooves are used as in Figure 5. The elongate bodies make the outer tubes 1106a to be contiguous with each other. There is cover (not shown) on an elbow of the connector that is flush with the outer tube 1110 to make the connector visually aesthetic. Wires can easily passes through the space 1107 and an outer space between the connector and the cover. A body 1110, an arm 1101 with conical end, a screw 1102, a securing member 1103, and a conical locking body 1104 with a screw nut 1105 in its base hole are brought together as shown in Figure 11 in a similar manner as in the other embodiments. Rotation of a screw 1102 through the trough 1109 will secure the tubes to the connector.

In Figure 12, a body 1201 of the connector has an inner body 1201 a and an outer body 1201b, which are integrated with the common base. An arm 1205 also has an inner arm 1205a and an outer arm 1205b that are also integrated with the base. Between the inner body 1201 a and the outer body 1201b, there is space 1202; and between the inner arm 1205a and the outer arm 1205b, there is space 1206. The inner arm 1205a has conical end 1216. For the securing bodies there is a hole 1208 extending along the axial direction. Conical locking bodies 1209 are comparatively reduced in diameter to create a space for an electric wire. The body 1201 and the arm 1205 have indented grooves 1203 and 1212 for receiving a screw 1204 as in Figure 5. The body 1205a with conical end 1216, the securing member 1207, and the conical locking member 1209 with a screw nut 1210 in the hole of its base are fitted together as in Figure 12, similar to other embodiments. The arms are then inserted into the respective tubes (not shown here). The rotation of the screw, using a screwdriver, will secure the tubes to the connectors.

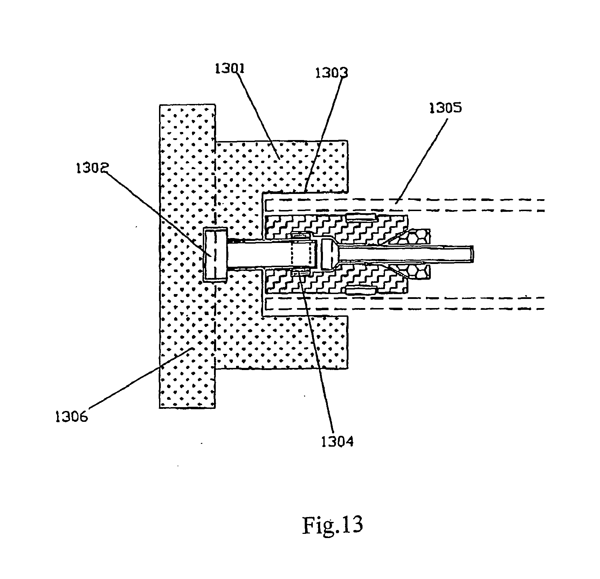

Figure 13 shows another example of connector for fixing a tube to a planer surface. A cylindrical plastic body 1301 with a circular hole 1303 is welded to a plate 1306 along with the screw 1302 in the hole as shown in Figure 13. The diameter of the hole is the same as the outer diameter of the tube 1305. A tube 1305 with a nut 1304 is provided in the manner described with reference to Figure 3. A nut 1304 in the tube 1305 is threaded onto a screw 1302. This connector arrangement can be used to stabilize (i.e. attach) tabular legs to a portable stool or a table.

In the specification and claims, the terms 'tubes' or 'pipes' are used; for the purposes of the invention these terms are intended to be generically the same. In providing connector of the invention tubes or hollow pipes can be connected and fixed or 'locked' together by the gripping of their ends using the connectors. It is of course also possible to connect solid tubes together provided their ends are provided with cylindrical apertures of sufficient depth to receive the split bodies or sleeves of the connectors. As a result in fixing connectors firmly to such solid tubes, the split bodies are forced or urged radially outwards by the opposing cones (conical ends) that are driven towards each other by various threaded rods, typically screws or threaded stems, as described above.

The tubes or pipes may have rectangular cross-sections, and if solid be formed with cavities at their ends to receive the connectors that are either as described, or rectangular. For a rectangular cavity as will be typical or rectangular tubes, the split sleeve will normally, but not necessarily, be also provided with a rectangular cross-section. A rectangular cross-section generally provides better friction and gripping against inside surfaces of the tube and so is more reliable when the connectors are in their operative configurations. A rectangular split sleeve is preferably formed of two like parts for convenience in use, but may be formed of four like parts, if preferred or desired.

In the described embodiments the split bodies are normally bodies formed with a conical end surface or a pyramidal end surface to receive the opposing cones, or opposing pyramids with polygonal cross-section, or cone and pyramid with polygonal cross-section. It is possible to 'omit' the conical end surfaces or pyramid end surfaces, in which case the cones and pyramids will still act, as they are drawn towards each other, to urge the split sleeves radially outwards. Thus the split body may simply have a central passage of sufficient diameter or length to receive the noses of the cones or pyramids.

In the above cases, and in the cases described, the outer surfaces of the sleeves fit firmly against inner surfaces of the tubes when the connectors are secured in position. It will be appreciated that the outer surfaces of the sleeves normally extend well into the ends of the tubes and this provides an extended support for the tubes adjacent their ends that helps resist any bending moments applied to the ends of the tubes. This also applies where the connectors are used to fix and locate a tube to a planar surface formed by part of a wall or a tabletop.

In the described embodiments the 'securing bodies', or split sleeves, are made up of two like generally semi-cylindrical parts. It will be appreciated that the securing bodies may be made up of the three or more part that are held together, when assembled for insertion into the end of a tube or pipe, and make up a hollow cylinder. Besides with the use of the elastic sleeve with slit and troughs, and proper modification of the arm, the connector can be locked to the tube with normal or even irregular cross-section.

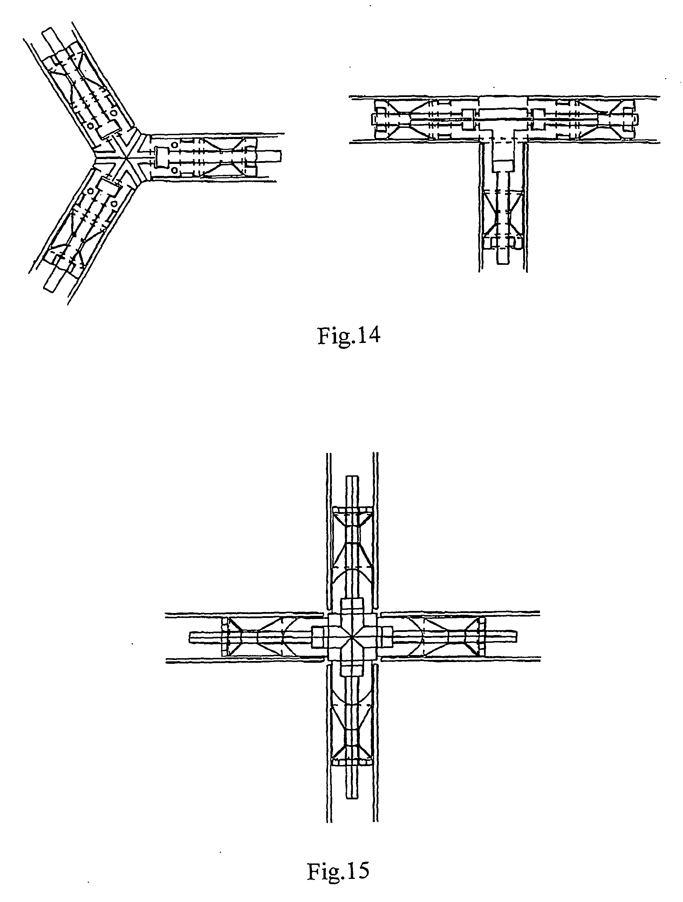

The connector can be secured directly to a tube as in Figure 1, Figure 2 and Figure 10. The connector can also have an arm like the one in Figure 1 and Figure 3. The arm might be used to attach some accessories to the tube for effectively connecting the tube to another object. The body of the connector can have two arms as shown in Figure 4, Figure 5, Figure 6, Figure 7, Figure 8 and Figure 9. In this case the connector can effectively connect two tubes together linearly or at an angle. A multiple arm connector can be formed by providing several arms to the body using the methods described in Figure 1 to Figure 10. Three such embodiments are shown in Figures 14 and 15 respectively. Different adaptations might then enable the screws or operating rod to be placed properly inside the connector for effective operation. Each arm is a connector by itself for connecting to a tube to work under the same basic principle as described previously. The method used to connect the smaller tube to the larger tube in Figure 9 can also be used to connect a tube to an arm of the connector, i.e. by rotation of the tube to secure the tube to the connector. There ought to be a definite friction between the inner surface of the sleeve and the dependent convergent body.

## Claims

1. A releasable connector for connecting to one end of a tube (507) comprising:
a split elongate sleeve (505) that is arranged to fit snugly inside the tube (507);
a pair of opposing convergent members (511, 506) that are mounted at opposite ends of the sleeve (505); and
an operating rod (502) extending centrally through the sleeve (505) arranged to move the convergent members (511, 506) towards each other in use to urge the sleeve (505) radially outwards to bear against the inside of the tube (507) and fix the connector to the tube (507) in an operative configuration; **characterised in that**:
an elongated body (501) provides one of the convergent members (511) at one end;
the operating rod (502) is anchored in the elongated body (501); and
the elongated body (501) has a side opening (503, 504), allowing the operating rod (502) to be inserted sideways into the elongated body (501).

2. The releasable connector according to claim 1, wherein the elongated body (501) has said convergent member (511) at each end, respectively forming part of the connector for connecting two tubes end to end.

3. The releasable connector according to claim 2, for connecting two like tubes end to end wherein a central part of the elongated body (501) includes a region with an external diameter substantially equal to the outside diameters of the two tubes.

4. The releasable connector according to any preceding claim, wherein the elongate sleeve (505) is split into two equal parts.

5. The releasable connector according to claim 4, wherein the sleeve parts are resiliently held together radially by a strap that surrounds a periphery of the sleeve (505).

6. The releasable connector according to any preceding claim, wherein the elongate sleeve (505) is cylindrical and is arranged to fit to a cylindrical cavity in an end of a respective tube.

7. The releasable connector according to any preceding claim, wherein the elongate sleeve (505) is a single body formed of elastic material with slit and trenches therealong.

8. The releasable connector according to any preceding claim, wherein the elongate sleeve (505) is adapted to be inserted into the tube and frictionally engage the interior of the tube.

9. The releasable connector according to any preceding claim, wherein in use rotation of the tube forces the sleeve (505) and the related convergent member (511) to thread forward to urge the sleeve to secure to the tube.

10. The releasable connector according to any preceding claim, wherein one of the convergent members (511) is shaped independently of the other, and each convergent member (511) is either frusto-conical or frusto-pyramidal with triangular, square or other polygonal cross-section.

## Patentansprüche

1. Lösbarer Verbinder zum Verbinden mit einem Ende eines Rohres (507), der Folgendes umfasst:
eine geteilte verlängerte Hülse (505), die so angeordnet ist, dass sie eng anliegend in das Rohr (507) passt;
ein Paar gegenüberliegende konvergierende Elemente (511, 506), die an gegenüberliegenden Enden der Hülse (505) montiert sind; und
einen Betätigungsstab (502), der mittig durch die Hülse (505) verläuft und angeordnet ist um die konvergierenden Elemente (511, 506) beim Gebrauch aufeinander zu zu bewegen, um die Hülse (505) radial nach außen zu drängen, so dass sie an der Innenseite des Rohres (507) anliegt, und den Verbinder an dem Rohr (507) in einer Betriebskonfiguration zu befestigen; **dadurch gekennzeichnet, dass**:
ein länglicher Körper (501) eines der konvergierenden Elemente (511) an einem Ende bildet;
der Betätigungsstab (502) in dem länglichen Körper (501) verankert ist; und
der längliche Körper (501) eine Seitenöffnung (503, 504) aufweist, die es erxnöglicht, den Betätigungsstab (502) seitwärts in den länglichen Körper (501) einzuführen.

2. Lösbarer Verbinder nach Anspruch 1, wobei sich die konvergierenden Elemente (511) jeweils an den Enden des länglichen Körpers (501) befinden und jeweils einen Teil des Verbinders zum Verbinden von zwei Rohren Ende an Ende bilden.

3. Lösbarer Verbinder nach Anspruch 2 zum Verbinden von zwei gleichen Rohren Ende an Ende, wobei ein mittlerer Teil des länglichen Körpers (501) eine Region mit einem Außendurchmesser aufweist, der im Wesentlichen gleich den Außendurchmessern der beiden Rohre ist.

4. Lösbarer Verbinder nach einem beliebigen der vorherigen Ansprüche, wobei die verlängerte Hülse (505) in zwei gleiche Teile geteilt ist.

5. Lösbarer Verbinder nach Anspruch 4, wobei die Hülsenteile radial von einem Riemen, der eine Peripherie der Hülse (505) umgibt, elastisch zusammengehalten werden.

6. Lösbarer Verbinder nach einem beliebigen der vorherigen Ansprüche, wobei die Verlängerte Hülse (505) zylindrisch und so angeordnet ist, dass sie in einen zylindrischen Hohlraum in einem Ende eines jeweiligen Rohres passt.

7. Lösbarer Verbinder nach einem beliebigen der vorherigen Ansprüche, wobei die verlängerte Hülse (505) ein einzelner Körper ist, der aus einem elastischen Material mit Schlitz und Rinnen daran entlang ausgebildet ist.

8. Lösbarer Verbinder nach einem beliebigen der vorherigen Ansprüche, wobei die verlängerte Hülse (505) so gestaltet ist, dass sie in das Rohr eingeführt wird und reibungsmäßig ins Innere des Rohres eingreift.

9. Lösbarer Verbinder nach einem beliebigen der vorherigen Ansprüche, wobei eine Rotation des Rohres beim Gebrauch die Hülse (505) und das zugehörige konvergierende Element (511) vorwärtsschraubt, um das Rohr zur Sicherung gegen die Hülse zu bringen.

10. Lösbarer Verbinder nach einem beliebigen der vorherigen Ansprüche, wobei eines der konvergierenden Elemente (511) unabhängig von dem anderen gestaltet und jedes konvergierende Element (511) entweder kegelstumpfförmig oder pyramidenstumpfförmig mit einem dreieckigen, quadratischen oder einem anderen polygonalen Querschnitt ist.

## Revendications

1. Raccord amovible destiné à être raccordé à une extrémité d'un tube (507), comprenant:
un manchon allongé divisé (505) arrangé de sorte à être bien ajusté dans le tube (507) ;
une paire d'éléments convergents opposés (511, 506) montés au niveau des côtés opposés du manchon (505) ; et
une tige opérationnelle (502) s'étendant à travers le centre du manchon (505), arrangée à déplacer les éléments convergents (511, 506) l'un vers l'autre en service pour pousser le manchon (505) radialement vers l'extérieur afin de reposer contre l'intérieur du tube (507) et de fixer le raccord sur le tube (507) dans une configuration opérationnelle ;
**caractérisé en ce que** :
un corps longiligne (501) constitue l'un des éléments convergents (511) au niveau d'une extrémité ;
la tige opérationnelle (502) est ancrée dans le corps allongé (501) ; et
le corps longiligne (501) comporte une ouverture latérale (503, 504) permettant l'insertion latérale de la tige opérationnelle (502) dans le corps allongé (501).

2. Raccord amovible selon la revendication 1, dans lequel le corps longiligne (501) comporte un dit élément convergent (511) au niveau de chaque extrémité, faisant respectivement partie du raccord en vue du raccordement bout à bout de deux tubes.

3. Raccord amovible selon la revendication 2, destiné au raccordement bout à bout de deux tubes similaires, une partie centrale du corps longiligne (501) englobant une région ayant un diamètre extérieur pratiquement égal aux diamètres extérieurs des deux tubes.

4. Raccord amovible selon l'une quelconque des revendications précédentes, dans lequel le manchon allongé (505) est divisé en deux parties égales.

5. Raccord amovible selon la revendication 4, dans lequel les parties du manchon sont retenues dans un état assemblé de manière élastique et radiale par une bride entourant la périphérie du manchon (505).

6. Raccord amovible selon l'une quelconque des revendications précédentes, dans lequel le manchon allongé (505) est cylindrique et est arrangé à être ajusté dans une cavité cylindrique dans une extrémité d'un tube respectif.

7. Raccord amovible selon l'une quelconque des revendications précédentes, dans lequel le manchon allongé (505) est constitué par un seul corps composé d'un matériau élastique comportant une fente et des tranchées le long de sa longueur.

8. Raccord amovible selon l'une quelconque des revendications précédentes, dans lequel le manchon allongé (505) est adapté à être inséré dans le tube et à s'engager par frottement dans l'intérieur du tube.

9. Raccord amovible selon l'une quelconque des revendications précédentes, dans lequel la rotation du tube en service entraîne le filetage vers l'avant du manchon (505) et de l'élément convergent associé (511) afin d'entraîner la sécurisation du manchon sur le tube.

10. Raccord amovible selon l'une quelconque des revendications précédentes, dans lequel un des éléments convergents (511) est formé indépendamment de l'autre, chaque élément convergent (511) ayant une forme en tronc de cône ou en tronc de pyramide avec une section transversale triangulaire, carrée ou d'une autre forme polygonale.
